# DEMANDE DE BREVET EUROPEEN

(11) **EP 0 658 898 A1**
(43) Date de publication de la demande: **21.06.1995**
(21) Numéro de dépôt: 94402917.2
(22) Date de dépôt: 16.12.1994
(51) Int. Cl.: G11B 23/023

(54) **Conteneur en matière plastique thermoformée tel qu'une enveloppe pour cassette**

(30) Priorité: 16.12.1993 FR 9315169
(71) Demandeur: EMBALLAGES TECHNIQUES ET CONDITIONNEMENTS E.T.C. (Société Anonyme), F-69210 Savigny (FR)
(72) Inventeur: Espallargas, Jacky, F-69210 L'Arbresle (FR)
(74) Mandataire: Derambure, Christian

(57) **Abrégé**

L'invention concerne un conteneur en matière plastique thermoformée du type comportant une première et une seconde parois (1, 2), en appui l'une contre l'autre, associées rigidement l'une à l'autre à leur périphérie (3). L'une des parois (1) est plane dans son ensemble lorsque le conteneur est ouvert, tandis que l'autre paroi (2) comporte un entourage périphérique (4a, 4b) délimitant les chants du conteneur et comportant des reliefs de rigidification. Les deux parois (1, 2) sont solidarisées l'une à l'autre également à l'intérieur du ou des entourage(s) (4a, 4b).

## Description

L'invention concerne un conteneur en matière plastique thermoformée tel qu'une enveloppe pour cassette.

On connaît déjà des conteneurs en matière plastique thermoformée du type comportant une première et une seconde parois en appui l'une contre l'autre, associées rigidement l'une à l'autre à leur périphérie, l'une des parois étant plane dans son ensemble lorsque le conteneur est ouvert tandis que l'autre paroi comporte un ou plusieurs entourages périphériques délimitant les chants du conteneur. Dans le cas où le conteneur est une enveloppe pour cassette, il est associé à une même première paroi plane, une seconde paroi pourvue de deux entourages périphériques délimitant deux compartiments écartés l'un de l'autre. Les parois sont minces de manière à être flexibles, notamment entre les deux compartiments, les entourages des deux compartiments sont agencés pour pouvoir venir en contact et en regard l'un avec l'autre et sont pourvus de reliefs d'association complémentaires. Ainsi l'enveloppe pour cassette peut être ouverte pour pouvoir y placer ou au contraire enlever une cassette et inversement, être fermée, les reliefs complémentaires des deux entourages maintenant alors le conteneur fermé.

Dans une telle réalisation, on rencontre un problème découlant de la faible épaisseur des parois. Celle-ci est nécessaire pour assurer la flexibilité entre les deux compartiments pour former une charnière. Mais, inversement, cette flexibilité constitue un inconvénient pour la partie restante du conteneur (à savoir ses grandes faces correspondant aux grandes faces de la casette).

Dans l'état connu de la technique, on a surmonté cet inconvénient en interposant entre les deux parois et à l'intérieur de chaque entourage, mais à l'exception de la zone flexible formant charnière, un insert de rigidification par exemple sous la forme d'une découpe en carton.

Néanmoins, une telle réalisation s'accommode mal d'une industrialisation poussée de la fabrication et elle est onéreuse.

L'invention a donc pour but de remédier à ces inconvénients en proposant un conteneur en matière plastique du type mentionné précédemment et plus spécialement une enveloppe pour cassette. Cette dernière est réalisée à partir de parois minces en matière plastique thermoformée permettant une bonne flexibilité de la charnière du conteneur tout en ayant une rigidité suffisante à l'endroit des compartiments où est logée la cassette, le conteneur étant dépourvu de tout insert de rigidification interposé entre les deux parois, à l'intérieur de chaque entourage. A cet effet, l'invention propose deux modes de réalisation d'un conteneur du type précédemment mentionné.

Selon un premier mode de réalisation, le conteneur est d'abord caractérisé par le fait que les deux parois sont solidarisées rigidement l'une à l'autre également à l'intérieur du ou des entourages.

Les deux parois sont solidarisées l'une à l'autre à l'intérieur de chaque entourage sur la totalité de leur superficie ou, au contraire, sur une partie seulement. Dans ce cas, cette solidarisation intervient de place en place sous forme de zones ponctuelles ou longilignes ou surfaciques.

La solidarisation des deux parois est assurée par collage, soudage ou clipsage.

Selon une caractéristique importante du présent mode de réalisation, l'une au moins des deux parois comporte des reliefs de rigidification dans sa zone de solidarisation avec l'autre paroi. Ces reliefs de rigidification se présentent sous la forme d'une série de nervures en saillie séparées par des rainures en creux. La paroi pourvue de reliefs est associée rigidement à l'autre paroi préférentiellement à l'endroit des rainures en creux.

Selon un second mode de réalisation, le conteneur est caractérisé par le fait que d'une part, l'une au moins des deux parois comporte des reliefs de rigidification dans sa zone de solidarisation avec l'autre paroi et d'autre part, les deux parois se trouvent être solidarisées l'une à l'autre par simple contact à l'intérieur du ou des entourages. A cet effet, lesdites parois sont réalisées en un matériau présentant une rigidité suffisante et ont une épaisseur suffisante.

Afin de renforcer la rigidité des parois, les reliefs de rigidification se présentent sous la forme d'une série de nervures en saillie, s'étendant sensiblement perpendiculairement à l'axe de la charnière, c'est-à-dire s'étendant dans la petite dimension de chaque entourage, et séparées par des rainures en creux.

Ainsi, les parois restent en permanence en contact ou quasiment en contact. Tout phénomène de déformation des parois à l'intérieur des entourages est évité à la fois du fait de la disposition des nervures et rainures, mais aussi du choix du matériau et de son épaisseur.

Selon une version avantageuse de l'invention, la paroi à reliefs de rigidification est la paroi pourvue de l'entourage périphérique.

L'invention concerne également un conteneur pour cassette.

Les autres caractéristiques de l'invention résulteront de la description qui suivra d'une forme de réalisation possible, mais nullement limitative d'un conteneur selon l'invention se présentant sous la forme d'une enveloppe pour cassette.

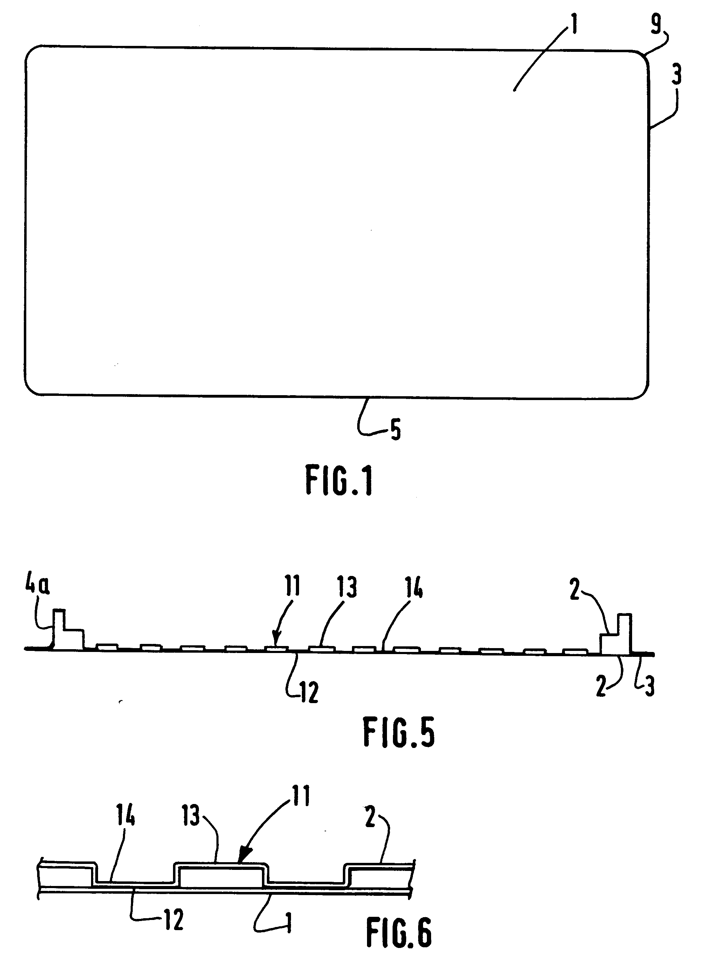

La figure 1 est une vue en élévation du conteneur formant enveloppe pour cassette à l'état fermé.

Les figures 2 et 3 sont deux vues schématiques de côté du conteneur formant enveloppe pour cassette selon la figure I, montrant respectivement la charnière et le côté opposé à la charnière.

La figure 4 est une vue schématique du conteneur ouvert, vers l'intérieur.

La figure 5 est une vue schématique en coupe selon la ligne V/V de la figure 4.

La figure 6 est une vue schématique partielle à plus grande échelle de la figure 5.

L'invention concerne un conteneur qui est, en l'occurrence, une enveloppe pour cassette. Le conteneur est essentiellement constitué en matière plastique thermoformée et comporte une première et une seconde paroi 1, 2.

Lorsque le conteneur formant enveloppe pour cassette est totalement ouvert ainsi qu'il est représenté sur la figure 4, la première paroi 1, externe, est plane dans son ensemble. La seconde paroi 2 est située du côté interne du conteneur et elle présente une forme tourmentée.

Les deux parois 1, 2 sont en appui l'une contre l'autre dans un certain nombre de zones de contact.

Les deux parois 1, 2 sont associées rigidement l'une à l'autre à leur périphérie commune libre 3. Cette association est réalisée par collage, soudage, ou clipsage.

Dans la réalisation considérée, la seconde paroi interne 2 comprend deux entourages 4a, 4b périphériques, en relief.

Ces deux entourages 4a, 4b sont séparés l'un de l'autre par une zone médiane 5 formant charnière. Les deux parois 1, 2 sont minces et ont sur la totalité de leur surface une même épaisseur telle que la zone médiane 5 est flexible et forme charnière. Cette épaisseur peut être, par exemple de l'ordre de 20/100 à 35/100 mm, préférentiellement 30/100 mm. Lorsque le conteneur formant enveloppe pour cassette est fermé, la paroi 1 comporte deux parties planes, sensiblement parallèles l'une à l'autre et l'une en regard de l'autre, séparées par la partie 5 incurvée.

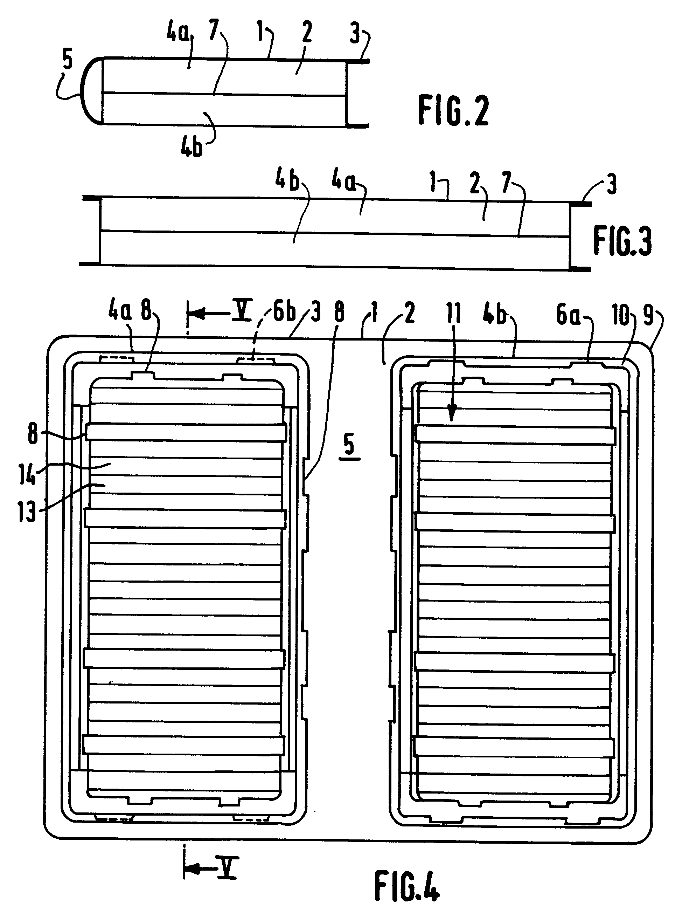

Dans la réalisation représentée, les deux entourages 4a, 4b, ont des dimensions et sont positionnés d'une manière telle que, lorsque l'enveloppe est fermée, ils viennent en contact et en regard l'un avec l'autre ainsi qu'il est représenté sur les figures 2 et 3.

Ils constituent alors, l'enveloppe formant une sorte de livre, les trois tranches ou chants de ce livre tandis que la zone flexible 5 en constitue le dos et la première paroi 1 en constitue la couverture.

Les entourages 4a, 4b sont pourvus de reliefs d'association complémentaires amovible 6a, 6b.

Dans la réalisation représentée, les deux entourages 4a, 4b ont, par rapport à un plan de base défini par les parois 1 et 2, sensiblement la même hauteur, le plan de joint 7 des deux entourages 4a, 4b de l'enveloppe fermée étant situé sensiblement à mi distance des deux plans délimitant la couverture de l'enveloppe.

Dans d'autres réalisations possibles, non représentées, les deux entourages 4a, 4b peuvent avoir des hauteurs différentes. Par exemple, l'un des entourages peut occuper la presque totalité de l'épaisseur de l'enveloppe fermée, l'autre entourage étant réduit à la hauteur minimale.

Les entourages 4a, 4b, représentés de façon rectangulaire sur les dessins peuvent avoir d'autres formes adaptées au contenu placé dans l'enveloppe.

Les reliefs d'association amovible 6a, 6b tels que des creux ou saillies peuvent faire l'objet de différentes variantes de réalisation.

Préférentiellement, les entourages 4a, 4b comprennent des reliefs de rigidification 8 sous forme de rainures et/ou de nervures s'étendant sensiblement perpendiculairement au plan des parois 1, 2.

Préférentiellement, les entourages 4a, 4b sont placés légèrement en retrait par rapport à la périphérie 3 de manière à assurer une zone de contact suffisante sur cette périphérie entre les deux parois 1, 2 et simultanément, à protéger les entourages 4a, 4b. Egalement, dans une forme de réalisation préférentielle telle qu'illustrée sur les dessins, les coins 9, 10 de la périphérie 3 des entourages 4a, 4b sont légèrement arrondis à la fois pour des raisons tenant à la fabrication des deux parois 1, 2, mais également pour ne pas blesser l'utilisateur.

Selon l'invention, les deux parois 1, 2 sont solidarisées l'une à l'autre également à l'intérieur des deux entourages 4a, 4b. De plus, le conteneur est dépourvu de tout insert de rigidification rapporté, interposé entre les deux parois 1, 2. Enfin, l'une au moins des deux parois - en l'occurrence la seconde paroi 2 - comporte des reliefs de rigidification 11 dans sa zone de solidarisation avec l'autre paroi 1. En l'occurrence les reliefs de rigidification 11 sont situés à l'intérieur des entourages 4a, 4b.

Etant donné l'absence de tout insert entre les deux parois 1, 2, celles-ci peuvent être solidarisées directement l'une à l'autre par collage, soudage ou clipsage, soit sur la totalité de leur superficie, soit sur une partie seulement de celle-ci.

Toutefois, la solidarisation des deux parois 1, 2 par simple contact entre elles au niveau des reliefs de rigidification 11 assure une bonne rigidité du boîtier en l'absence de tout insert.

Dans la variante illustrée sur les dessins, les deux parois 1, 2, sont solidarisées, à l'intérieur des entourages 4a, 4b de place en place, sous forme de zones ponctuelles ou longilignes ou surfaciques 12.

Les reliefs de rigidification 11 se présentent sous la forme d'une série de nervures 13 placées de façon saillante séparées par des rainures en creux 14. En section droite transversale (figures 5 et 6), les nervures 13 et les rainures 14 ont un profil en forme de U aplati. Les âmes des U des nervures 13 et les âmes des U des rainures 14 ont sensiblement la même dimension. Dans cette variante de réalisation, la totalité de la superficie de la seconde paroi 2 dans les entourages 4a, 4b est formée d'une succession de nervures 13 et de rainures 14. Selon le dessin, ces nervures 13 et rainures 14 sont placées sensiblement perpendiculairement à l'axe de la charnière 5, c'est-à-dire s'étendent dans la largeur de l'entourage.

Les réalisations qui viennent d'être décrites plus spécialement ont comme avantage que les deux parois 1, 2 sont en contact l'une avec l'autre à l'intérieur des entourages 4a, 4b, à l'endroit des âmes des rainures en creux 14. La cassette repose sur les âmes des nervures 13. Le caractère aplati des nervures et des rainures 13, 14 a comme conséquence que la place perdue dans l'enveloppe fermée ou encore la surépaisseur résultant des nervures et rainures 13, 14 est très faible et ne constitue donc pas un inconvénient.

Les réalisations qui viennent d'être décrites ont également comme avantage que le processus de solidarisation des deux parois 1, 2 peut être aisément automatisé. Par exemple dans une variante possible de procédé, dans le cas d'une solidarisation rigide, la seconde paroi 2 peut passer sur un rouleau d'encollage déposant de la colle appropriée sur les âmes des U des rainures en creux, du côté tourné vers la première paroi. Dans une autre variante possible de procédé de réalisation, la solidarisation rigide peut être réalisée par soudage ultra-sons, les deux parois 1 et 2 étant en contact, s'agissant de la seconde paroi 2 à l'endroit des âmes des U des rainures en creux 14.

Dans d'autres réalisations possibles, les reliefs de rigidification 11, sont prévus sur la première paroi 1, et non sur la seconde paroi 2. Ou encore, il est prévu des reliefs de rigidification 11 sur les deux parois 1, 2.

L'invention concerne également un procédé de réalisation d'un conteneur en matière plastique thermoformée tel qu'une enveloppe pour cassette qui vient d'être décrite. Dans ce procédé on réalise séparément les deux parois 1, 2, une des parois étant pourvue du ou des entourages 4a, 4b ainsi que des reliefs 6a, 6b, 8 et 11, 13, 14 précédemment décrits.

Puis les deux parois 1, 2 ainsi réalisées sont amenées l'une en regard de l'autre.

En l'absence de toute phase d'insertion entre les deux parois d'un insert de rigidification rapporté, il peut alors être procédé à la solidarisation des deux parois 1, 2.

Cette solidarisation peut intervenir par collage, soudage ou clipsage, ou par simple contact des deux parois 1, 2.

## Revendications

1. Conteneur en matière plastique thermoformée du type comportant une première et une seconde parois (1, 2), en appui l'une contre l'autre, associées rigidement l'une à l'autre à leur périphérie (3), l'une des parois (1) étant plane dans son ensemble lorsque le conteneur est ouvert tandis que l'autre paroi (2) comporte un entourage périphérique (4a, 4b) délimitant les chants du conteneur, ledit conteneur étant dépourvu de tout insert de rigidification interposé entre les deux parois (1, 2), à l'intérieur de chaque entourage (4a, 4b), caractérisé par le fait que les deux parois (1, 2) sont solidarisées rigidement l'une à l'autre également à l'intérieur du ou des entourage(s) (4a, 4b).

2. Conteneur selon la revendication 1, caractérisé par le fait que les deux parois (1, 2) sont solidarisées l'une à l'autre sur la totalité de leur superficie.

3. Conteneur selon la revendication 1, caractérisé par le fait que les deux parois (1, 2) sont solidarisées l'une à l'autre à l'intérieur de chaque entourage (4a, 4b) sur une partie seulement de leur superficie.

4. Conteneur selon la revendication 3, caractérisé par le fait que les deux parois (1, 2) sont solidarisées l'une à l'autre de place en place sous forme de zones de solidarisation (12) ponctuelles ou longilignes ou surfaciques.

5. Conteneur selon la revendication 1, caractérisé par le fait que les deux parois (1, 2) sont solidarisées l'une à l'autre rigidement par collage, soudage ou clipsage.

6. Conteneur selon la revendication 1, caractérisé par le fait que l'une au moins des deux parois (2) comporte des reliefs de rigidification (11) dans sa zone de solidarisation avec l'autre paroi (1).

7. Conteneur selon la revendication 6, caractérisé par le fait que les reliefs de rigidification (11) se présentent sous la forme d'une série de nervures (13) en saillie séparées par des rainures en creux (14).

8. Conteneur selon la revendication 7, caractérisé par le fait que la paroi (2) pourvue de reliefs est associée rigidement à l'autre paroi (1) à l'endroit des rainures en creux (14).

9. Conteneur selon l'une quelconque des revendications 1 à 8, caractérisé par le fait que sur une même première paroi (1) est associée rigidement une seconde paroi (2) pourvue de deux entourages (4a, 4b) délimitant deux compartiments écartés l'un de l'autre par une zone flexible (5) des deux parois (1, 2) formant charnière, les deux entourages (4a, 4b) pouvant venir en contact et en regard l'un avec l'autre et étant pourvus de reliefs d'association amovible complémentaires (6a, 6b).

10. Conteneur en matière plastique thermoformée du type comportant une première et une seconde parois (1, 2), en appui l'une contre l'autre, associées rigidement l'une à l'autre à leur périphérie (3), l'une des parois (1) étant plane dans son ensemble lorsque le conteneur est ouvert tandis que l'autre paroi (2) comporte un entourage périphérique (4a, 4b) délimitant les chants du conteneur, ledit conteneur étant dépourvu de tout insert de rigidification interposé entre les deux parois (1, 2), caractérisé par le fait que l'une au moins des deux parois (2) comporte des reliefs de rigidification (11) dans sa zone de solidarisation avec l'autre paroi (1) et par le fait que les deux parois (1, 2) se trouvent être solidarisées l'une à l'autre par simple contact à l'intérieur du ou des entourage(s) (4a, 4b).

11. Conteneur selon la revendication 9, caractérisé par le fait que les reliefs de rigidification (11) se présentent sous la forme d'une série de nervures (13) en saillie, s'étendant sensiblement perpendiculairement à l'axe de la zone flexible (5) formant charnière, et séparées par des rainures en creux (14).

12. Conteneur selon la revendication 6 ou 10, caractérisé par le fait que la paroi (2) à reliefs de rigidification est la paroi pourvue de l'entourage périphérique (4a, 4b).

13. Conteneur selon l'une quelconque des revendications 1 à 12, caractérisé par le fait que les parois (1, 2) sont minces en ayant une même épaisseur leur conférant une certaine flexibilité, et sont réalisées en un matériau présentant une rigidité suffisante.

14. Conteneur selon l'une quelconque des revendications 1 à 13, caractérisé par le fait qu'il forme une enveloppe pour cassette.

15. Procédé de réalisation d'un conteneur selon l'une quelconque des revendications 1 à 14, caractérisé par le fait que l'on réalise séparément une première et une seconde parois (1, 2), et sans étape d'interposition entre les deux parois (1, 2) d'un insert de rigidification, on solidarise les deux parois (1, 2), d'une part par soudage ou collage dans leur périphérie (3) et d'autre part par soudage ou collage, ou par simple contact, dans des zones de solidarisation (12) où les deux parois (1, 2) sont en contact l'une avec l'autre.
